# FASCICULE DE BREVET EUROPEEN

(11) **EP 3 484 727 B1**
(45) Date de publication et mention de la délivrance du brevet: **02.09.2020**
(21) Numéro de dépôt: 17751843.8
(22) Date de dépôt: 14.07.2017
(51) Int. Cl.: B60C 15/02

(54) **ADAPTATEUR POUR ENSEMBLE MONTE AVEC COUCHE DE REPERAGE**
ADAPTER FÜR REIFEN MIT MARKERUNGSSCHICHT
ADAPTER FOR TIRE ASSEMBLY WITH MARKER LAYER

(30) Priorité: 15.07.2016 FR 1670383
(43) Date de publication de la demande: 22.05.2019
(73) Titulaire: Compagnie Générale des Etablissements Michelin, 63000 Clermont-Ferrand (FR)
(72) Inventeur: MERINO LOPEZ, José, 63040 Clermont-Ferrand Cedex 9 (FR)
(74) Mandataire: Noel, Luminita
(86) Numéro de dépôt international: PCT/IB2017/054264
(87) Numéro de publication internationale: WO 2018/011758

(56) Documents cités:
- WO-A1-2009/094803
- WO-A1-2015/091620
- FR-A1- 3 026 051
- FR-A1- 3 028 449

## Description

### DOMAINE TECHNIQUE DE L'INVENTION

La présente invention concerne un adaptateur pour un ensemble roulant destiné à équiper un véhicule de tourisme. Elle a également pour objet ledit ensemble roulant, constitué par un pneumatique, une jante et deux adaptateurs assurant la liaison entre les deux bourrelets du pneumatique et la jante.

### ETAT DE LA TECHNIQUE ANTERIEURE

Un pneumatique étant une structure torique ayant pour axe de révolution son axe de rotation, il peut être décrit dans un plan radial passant par son axe de rotation. Dans ce qui suit, pour tout plan radial, les directions radiale, axiale et circonférentielle désignent respectivement les directions perpendiculaire à l'axe de rotation du pneumatique, parallèle à l'axe de rotation du pneumatique et perpendiculaire au plan radial. Le plan équatorial désigne le plan passant par le milieu de la bande de roulement et perpendiculaire à l'axe de rotation du pneumatique. On appelle coupe radiale toute coupe du pneumatique selon un plan radial. De façon générale, un pneumatique comprend une bande de roulement, destinée à entrer en contact avec un sol, deux flancs prolongeant radialement vers l'intérieur les extrémités axiales de la bande de roulement et deux bourrelets prolongeant radialement vers l'intérieur les deux flancs et destinés à entrer en contact avec une jante.

Dans le document WO 00/78565 il est proposé d'insérer un adaptateur élastique, entre un bourrelet de pneumatique et une jante. Un tel adaptateur comprend, axialement de l'intérieur vers l'extérieur, une extrémité axialement intérieure appelée bourrelet d'adaptateur comprenant un élément de renfort intérieur et destinée à assurer l'accrochage de l'adaptateur sur la jante, une extrémité axialement extérieure comprenant un élément de renfort extérieur et destinée à recevoir un bourrelet de pneumatique, et un corps reliant les deux extrémités respectivement axialement intérieure et axialement extérieure. L'élément de renfort extérieur comprend une première portion sensiblement radiale, située à l'intérieur de l'extrémité axialement extérieure, et une deuxième portion sensiblement axiale, située à l'intérieur du corps, les première et deuxième portions étant sensiblement perpendiculaires entre elles et formant un ensemble continu.

Un tel adaptateur permet de monter un pneumatique sur une jante plus étroite que celle recommandée par les normes usuelles, telles que, par exemple, la norme ETRTO (European Tyre and Rim Technical Organisation). La jante peut cependant être conforme à cette norme.

Il est encore connu du document FR2,491,836A1 un adaptateur disposé entre le bourrelet d'un pneumatique et une jante destiné à résoudre les problèmes de montage et de démontage d'un pneumatique et d'une jante. Cet adaptateur comprend principalement deux tringles annulaires espacées l'une de l'autre et montées à l'intérieur d'un corps annulaire comprenant une nappe. Les tringles sont reliées par un câble, ou un ensemble de câbles parallèles ou une nappe qui, par ailleurs, les entoure.

Un ensemble roulant, équipé d'un adaptateur tel que décrit dans les documents précédemment cités, assure les principales fonctions d'un ensemble roulant classique, dans lequel le pneumatique est monté directement sur sa jante recommandée, et garantit notamment une réponse en poussée de dérive lors de l'application d'un angle de dérive, c'est-à-dire de l'application d'une rotation autour d'une direction radiale, avec une flexibilité suffisante pour éviter toute dégradation de l'ensemble roulant.

Le document WO 2015091620 décrit un adaptateur pour ensemble roulant. Cet ensemble roulant comprend un pneumatique ayant deux bourrelets, une jante, ledit adaptateur assurant la jonction entre l'un des bourrelets et la jante. L'adaptateur comporte une extrémité axialement intérieure destinée à être monté sur le siège de la jante. Au moins une armature de renforcement principale assure la liaison entre un renfort extérieur et un renfort intérieur de l'adaptateur. Un siège d'adaptateur sensiblement cylindrique est destiné à recevoir l'un desdits bourrelets. L'adaptateur décrit ne comporte aucun moyen permettant d'indiquer un éventuel endommagement.

Le document WO 2009094803 décrit un pneumatique comportant une couche servant d'indicateur d'usure. Cette couche comprend un mélange caoutchoutique, un matériau coloré et un agent anti-usure à base de silicone, rendant la composition particulièrement complexe.

Les inventeurs ont constaté que les adaptateurs, du fait qu'ils ne sont en général pas en contact direct avec le sol, ont une durée de vie généralement supérieure aux pneumatiques montés dessus. Par ailleurs, la plupart des utilisateurs de pneumatiques, ou à défaut, les centres de maintenance des véhicules et en particulier de pneumatiques, sont régulièrement amenés à contrôler l'usure des pneumatiques. Les indicateurs d'usure sur la bande de roulement sont prévus à cet effet. Il est ainsi relativement aisé de déterminer si un pneumatique doit être changé. A contrario, les adaptateurs ne disposent pas de moyens équivalents permettant d'indiquer à l'utilisateur si la durée de vie est épuisée ou non.

Pour pallier ces différents inconvénients, l'invention prévoit différents moyens techniques.

### EXPOSE DE L'INVENTION

Tout d'abord, un premier objet de l'invention consiste à prévoir un adaptateur permettant d'indiquer à l'utilisateur si la durée de vie arrive à son terme.

Un autre objet de l'invention consiste à prévoir un adaptateur permettant d'indiquer à l'utilisateur qu'un dommage susceptible d'affecter la structure est survenu et qu'une intervention est recommandée.

Pour ce faire, l'invention prévoit un adaptateur pour ensemble roulant, ledit ensemble roulant ayant un axe de rotation et comprenant un pneumatique (P) ayant deux bourrelets (B), une jante (J) ayant deux rebords de jante, ledit adaptateur (A) assurant la jonction entre l'un des bourrelets (B) et la jante (J), ledit adaptateur (A) comprenant :
- une extrémité axialement intérieure destinée à être montée sur un rebord de jante et comprenant un élément de renfort intérieur et une face axialement extérieure sensiblement radiale ;
- une extrémité axialement extérieure destinée à entrer en contact avec un bourrelet (B) et comprenant un élément de renfort extérieur et une face axialement intérieure ou face d'appui sensiblement radiale ;
- un corps sensiblement axial connectant ladite extrémité axialement extérieure avec ladite extrémité axialement intérieure, de manière à former une pièce unitaire ;
- ledit corps comprenant un siège d'adaptateur, destiné à recevoir le bourrelet (B) et situé à proximité de l'extrémité axialement extérieure ;
- ledit corps comprenant au moins une armature de renforcement principale assurant la liaison entre l'élément de renfort extérieur et l'élément de renfort intérieur, l'armature de renforcement principale comprenant au moins une première et une seconde nappes de renfort disposées radialement l'une par rapport à l'autre, lesdites nappes de renfort comprenant chacune des renforts parallèles entre eux et enrobés de composition élastomère, dite gomme de calandrage ;
- une couche de composition élastomère de couleur différente du noir, encore appelée gomme de couleur, étant disposée au choix :
   - à la place de la gomme de calandrage enrobant les renforts de chaque nappe, ou
   - à la place de la gomme de calandrage enrobant les renforts et disposée uniquement sur le pourtour extérieur des nappes de renfort, ou
   - à l'extérieur de la gomme de calandrage.

La zone de repérage permet de facilement et rapidement rendre bien visible tout dommage ou usure prématurée causé à l'adaptateur. En outre, la zone de repérage est localisée à proximité immédiate des composants structurellement importants pour l'adaptateur Ainsi, tout dommage superficiel ou peu profond (soit la très vaste majorité des dommages dus aux chocs courants) ne libère pas la zone de repérage. L'utilisateur est donc prévenu uniquement lorsque la situation est bien susceptible de requérir une intervention de maintenance, de réparation, voire de changement de l'adaptateur.

Selon un mode de réalisation avantageux, la gomme de couleur comprend de l'oxyde de titane, du kaolin, de la craie ou leur mélange.

Selon un autre mode de réalisation avantageux, la gomme de couleur peut comprendre du TPE, tel que SIS, SBS.

Selon un exemple de réalisation, la gomme de couleur est sous forme de couche recouvrant une pluralité de renforts.

En variante, la gomme de couleur est sous forme d'enrobage individuel de chacun des câbles de renforts.

Selon encore un mode de réalisation avantageux, la gomme de couleur comprend une première couleur sous forme de couche recouvrant une pluralité de fils de renfort et au moins une seconde couleur (C3) distincte de la première, sous forme d'enrobage individuel de chacun des fils de renforts. Ce mode de réalisation permet d'obtenir des niveaux progressifs d'alerte, en fonction de la criticité des dommages. Les trois couleurs sont avantageusement aisément distinguables.

Selon encore un mode de réalisation avantageux, au moins une zone de repérage est localisée uniquement sur une portion de l'adaptateur. Cet agencement permet de cibler la ou les zones de repérage sur les zones de l'adaptateur sujettes aux chocs contre les trottoirs et autres types de chocs très fréquents, ou des zones avec plus d'usure par des râpages avec trottoirs ou par usure pneumatique/extenseur.

Par exemple la zone de repérage est placée au moins au niveau du contact entre l'adaptateur et le pneu. Dans ce cas le dommage sera bien visible lors du changement du pneu et demandera une action sur l'adaptateur, comme par exemple le remplacement de celui-ci par un adaptateur neuf.

De manière avantageuse, la zone de repérage est placée au moins au niveau de la surface extérieure de l'adaptateur, en particulier au niveau du renfort extérieur.

Selon une autre variante de réalisation, la zone de repérage est placée au moins au niveau du siège de l'adaptateur.

L'invention prévoit également un ensemble monté comprenant un adaptateur tel que préalablement décrit.

### DESCRIPTION DES FIGURES

Tous les détails de réalisation sont donnés dans la description qui suit, complétée par les figures 1 à 4, présentées uniquement à des fins d'exemples non limitatifs, et dans lesquelles :
- la figure 1 est une coupe radiale d'un exemple adaptateur monté sur un ensemble roulant selon l'invention ;
- la figure 2 illustre l'adaptateur seul en vue agrandie ;
- les figures 3A, 3B et 3C et 3D représentent des exemples d'adaptateurs selon l'invention ;
- la figure 4 est une représentation schématique d'une coupe d'une portion d'un autre exemple de réalisation d'adaptateur selon l'invention.

### DESCRIPTION DETAILLEE DE L'INVENTION

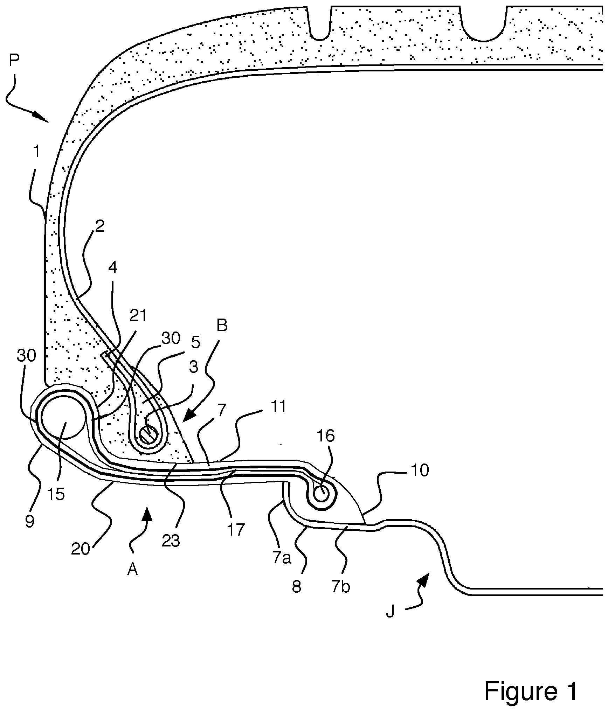

La figure 1 présente une coupe radiale, dans un plan YZ, d'un ensemble roulant comprenant un pneumatique P, une jante J et, pour chaque bourrelet B, un adaptateur A assurant la jonction entre le bourrelet B et la jante J. Le pneumatique P comprend une bande de roulement (non référencée) prolongée radialement vers l'intérieur par deux flancs 1, eux-mêmes prolongés radialement vers l'intérieur par deux bourrelets B. Dans chaque bourrelet B, l'armature de carcasse 2 s'enroule autour d'un élément de renforcement circonférentiel ou tringle 3, pour former un retournement 4 séparé de l'armature de carcasse 2 par un élément de remplissage 5. La jante J comprend, dans une portion médiane, une gorge de montage, destinée à faciliter le montage des bourrelets B du pneumatique P, et, à ses extrémités axiales, deux rebords de jante 8 comprenant chacun une portion sensiblement radiale ou crochet de jante 7a et une portion sensiblement axiale ou siège de jante 7b. L'adaptateur A comprend une extrémité axialement intérieure 10 comprenant un élément de renfort intérieur 16 et destinée à être montée sur un rebord de jante 8, une extrémité axialement extérieure 9 comprenant un élément de renfort extérieur 15 et destinée à entrer en contact par une face axialement intérieure, sensiblement radiale, ou face d'appui 21, avec un bourrelet B, et enfin un corps 11, connectant l'extrémité axialement extérieure 9 avec l'extrémité axialement intérieure 10 de manière à former une pièce unitaire. L'adaptateur comprend également au moins une armature de renforcement principale 17 assurant la liaison entre l'élément de renfort extérieur 15 et l'élément de renfort intérieur 16, et un siège d'adaptateur 23 sensiblement axial destiné à entrer en contact avec un bourrelet B.

L'armature de renforcement principale 17 comprend au moins une première 18 et une seconde 19 nappes de renfort se prolongeant l'une au voisinage de l'autre entre les éléments de renfort extérieur 15 et intérieur 16. Ces nappes de renfort 18 et 19 comprennent chacune des renforts 35 enrobés de composition élastomère, dite gomme de calandrage 31. De façon plus générale, l'armature de renforcement principale 17 de l'adaptateur peut être constituée par un matériau orthotrope ayant une direction principale de rigidité maximale formant un angle au moins égal à 30° avec la direction circonférentielle.

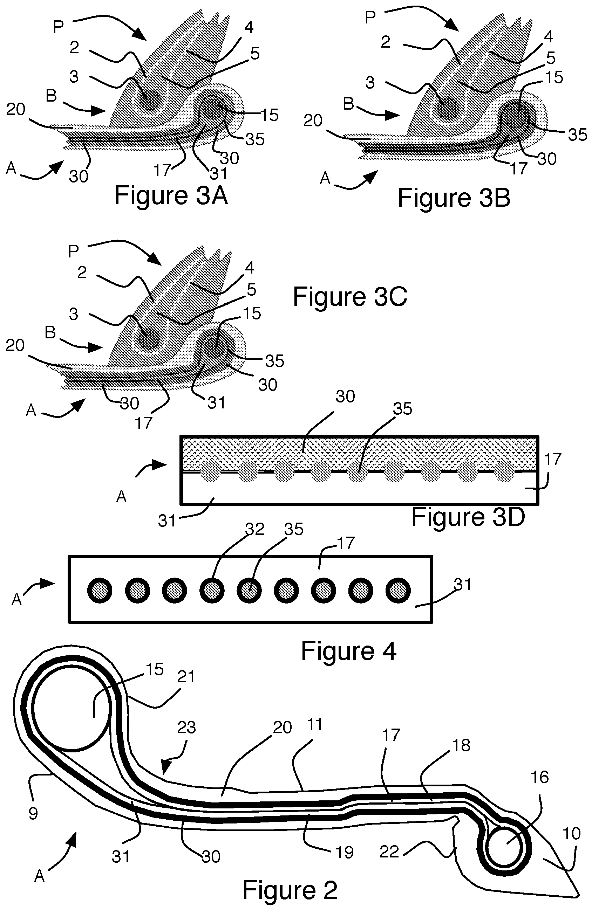

La figure 2 représente une coupe radiale d'un adaptateur selon l'invention non monté sur un ensemble roulant. Cet adaptateur comprend une extrémité axialement extérieure 9 comprenant un élément de renfort extérieur 15, une extrémité axialement intérieure 10 comprenant un élément de renfort intérieur 16, et un corps 11 comprenant une armature de renforcement principale 17. L'armature de renforcement principale 17 s'enroule respectivement autour de l'élément de renfort intérieur 16 de l'extrémité axialement intérieure 10 et autour de l'élément de renfort extérieur 15 de l'extrémité axialement extérieure 9. Au niveau du corps 11, les portions aller et retour de ladite couche de renforcement forment ainsi un empilement sensiblement radial d'au moins deux nappes de renforcement 18 et 19. Selon diverses variantes de réalisation, les renforts de la zone 17 sont radiaux, ou à angle. Par exemple, les angles de ces renforts sont préférentiellement entre +30° et -30° par rapport à la direction longitudinale. Les renforts sont des câbles textiles en PET, polyamide, rayonne, aramide.

**Le** corps 11 comprend en outre un siège d'adaptateur 23 destiné à entrer en contact avec un bourrelet de pneumatique. Le corps 11 a une largeur axiale L (non illustrée), mesurée entre la face axialement intérieure 21 de l'extrémité axialement extérieure 9 et la face axialement extérieure 22 de l'extrémité axialement intérieure 10.

L'armature de renforcement principale 17 est enveloppée par une couche de couleur 30 différente du noir, réalisée en matériau élastomère. Cette couche 30 est elle-même enrobée dans une couche externe 20 de matériau élastomère, de préférence noire. La couche de couleur 30 forme une couche de repérage du fait de sa couleur distincte des couches externes de protection. La couche 30 peut être par exemple rouge, ou bleue, ou verte, ou jaune, ou orange, ou autre couleur aisément visible par un utilisateur.

Dans un autre mode de réalisation, la distinctivité de la couche de repérage est obtenue en inversant les couleurs, de sorte que l'adaptateur comporte une couche externe 20 de couleur rouge, ou bleue, ou verte, ou jaune, ou orange, ou autre couleur aisément visible par un utilisateur, et une couche interne de repérage 30 noire, ou d'une autre couleur que celle de la couche externe 20.

La figure 3A illustre schématiquement un exemple d'une portion radialement extérieure d'un adaptateur sur lequel un pneumatique est agencé. La vue agrandie de la figure permet de bien visualiser l'interface entre les deux éléments. En outre, on observe l'armature de renforcement principale 17 comprenant une pluralité de renforts 35 sensiblement parallèles entre eux. Cette armature est enveloppée par une couche de couleur 30 différente du noir, elle-même recouverte d'une couche externe 20, de préférence noire. Dans ce mode de réalisation, la couche 30 recouvre la gomme de calandrage 31 de l'armature de renforcement 17.

Les figures 3B et 3C illustrent des variantes de réalisation par rapport à l'agencement en relation avec la figure 3A. Dans l'agencement de la figure 3B, l'armature de renforcement 17 et la couche de couleur 30 ne forment qu'un seul et même élément, Les caractéristiques de couleurs distinctives préalablement décrites en relation avec la couche de repérage 30 sont intégrées à l'armature 17, la couche de couleur étant agencée à la place de la gomme de calandrage 31 enrobant les renforts 35 des nappes 18 et 19. Autrement dit, dans ce mode e réalisation, la couche de couleur 30 sert de gomme de calandrage.

Dans l'agencement de la figure 3C, la couche de couleur 30 remplace la gomme de calandrage uniquement sur le pourtour extérieur des nappes de renfort 18 et 19. Ce mode de réalisation est également illustré en coupe transversale à la figure 3D.

La figure 4 illustre encore une variante de réalisation dans laquelle les renforts 35 de l'armature de renforcement 17 sont chacun enrobés d'un enrobage individuel 32 de couleur différente du noir. Ce mode de réalisation, formant des zones de repérage multiples (autant de zones que de fils de renfort) très localisées, permet de bien cibler les dommages qui sont révélés. En outre, cette approche permet d'éviter les alertes intempestives dues à des dommages superficiels.

Lorsque la zone de repérage 30 ou 32 est intégrée dans un adaptateur noir, elle est réalisée dans une teinte distincte du noir, de façon à être clairement visible lorsqu'elle est mise à l'air libre suite à un endommagement de la couche externe 20. En variante, la couche externe 20 est réalisée à partir d'une composition élastomère teintée (autre que noir) et la zone de repérage (couche 30 ou enrobage 32) est d'une autre couleur, ou en noir.

Un autre mode de réalisation prévoit une double zone de repérage. Dans ce mode de réalisation, une couche de couleur 30 telle que préalablement décrite en relation avec les figures 3A, 3B et 3C est prévue avec une première couleur. Au moins une seconde zone de repérage, constituée d'enrobages individuels 32, telle que préalablement décrite en relation avec la figure 4, est aussi prévue, avec une seconde couleur, distincte de la première. Ce mode de réalisation hybride permet de générer deux niveaux d'alerte ou avertissement. Un premier niveau d'alerte est donné lorsqu'un dommage libère une portion de la couche de couleur 30. Un second niveau d'alerte, plus critique, est donné lorsqu'un dommage libère un ou plusieurs enrobages individuels 32. Ce mode de réalisation est particulièrement adapté pour des adaptateurs destinés à des utilisations dans des milieux sévères ou agressifs et permet de bien connaître l'état réel de l'adaptateur et de prendre les mesures requises au moment opportun.

En variante des divers modes de réalisation préalablement décrits, la zone de repérage est située uniquement sur une portion de l'adaptateur. Par exemple, une zone de repérage est avantageusement prévue dans la zone prévue pour être visible depuis l'extérieur du véhicule une fois l'adaptateur et le pneumatique montés. C'est en effet dans cette zone, et plus particulièrement dans la zone axialement extérieure, que les risques de dommage sont les plus importants. Cette variante peut être mise en œuvre en relation avec une ou plusieurs couches 30 de repérage tel que préalablement décrit, ou en relation avec des enrobages 32 tel que décrit en relation avec la figure 4, ou en relation avec le mode hybride impliquant à la fois une ou plusieurs couches 30 et enrobages 32 de couleurs distinctes, tel que préalablement décrit.

Numéros de référence employés sur les figures
- A: Adaptateur
- B: Bourrelet
- J: Jante
- P: Pneumatique
- 1: Flanc
- 2: Carcasse
- 3: Tringle
- 4: Retournement
- 5: Elément de remplissage
- 7a: Crochet de jante
- 7b: Siège de jante
- 8: Rebord de jante
- 9: Extrémité axialement extérieure d'adaptateur
- 10: Extrémité axialement intérieure d'adaptateur
- 11: Corps d'adaptateur
- 15: Elément de renfort extérieur
- 16: Elément de renfort intérieur
- 17: Armature de renforcement principale
- 18: Première nappe de l'armature de renforcement principale
- 19: Seconde nappe de l'armature de renforcement principale
- 20: Couche externe
- 21: Face d'appui
- 22: Face axialement extérieure
- 23: Siège d'adaptateur
- 30: Couche de couleur différente du noir
- 31: Gomme de calandrage
- 32: Enrobage individuel de couleur différente du noir
- 35: Renforts sensiblement parallèles

## Revendications

1. Adaptateur (A) pour ensemble roulant, ledit ensemble roulant ayant un axe de rotation et comprenant un pneumatique (P) ayant deux bourrelets (B), une jante (J) ayant deux rebords de jante (8), ledit adaptateur (A) assurant la jonction entre l'un des bourrelets (B) et la jante (J), ledit adaptateur (A) comprenant :
- une extrémité axialement intérieure (10) destinée à être montée sur un rebord de jante (8) et comprenant un élément de renfort intérieur (16) et une face axialement extérieure (22) sensiblement radiale ;
- une extrémité axialement extérieure (9) destinée à entrer en contact avec un bourrelet (B) et comprenant un élément de renfort extérieur (15) et une face axialement intérieure ou face d'appui (21) sensiblement radiale ;
- un corps (11) sensiblement axial connectant ladite extrémité axialement extérieure (9) avec ladite extrémité axialement intérieure (10), de manière à former une pièce unitaire ;
- ledit corps (11) comprenant un siège d'adaptateur (23), destiné à recevoir le bourrelet (B) et situé à proximité de l'extrémité axialement extérieure (9) ;
- ledit corps (11) comprenant au moins une armature de renforcement principale (17) assurant la liaison entre l'élément de renfort extérieur (15) et l'élément de renfort intérieur (16), l'armature de renforcement principale (17) comprenant au moins une première (18) et une seconde (19) nappes de renfort disposées radialement l'une par rapport à l'autre, lesdites nappes de renfort (18, 19) comprenant chacune des renforts (35) parallèles entre eux et enrobés de composition élastomère, dite gomme de calandrage (31) ;
- **caractérisé en ce que** une couche (30) de composition élastomère de couleur différente du noir, encore appelée gomme de couleur, est disposée au choix :
- à la place de la gomme de calandrage (31) enrobant les renforts (35) de chaque nappe, **ou**
- à la place de la gomme de calandrage (31) enrobant les renforts (35) et disposée uniquement sur le pourtour extérieur des nappes de renfort, **ou**
- à l'extérieur de la gomme de calandrage (31).

2. Adaptateur selon la revendication 1, **caractérisé en ce que** la gomme de couleur (30) comprend de l'oxyde de titane, du kaolin, de la craie ou leur mélange.

3. Adaptateur selon l'une des revendications précédentes, **caractérisé en ce que** la gomme de couleur (30) comprend du TPE, tel que SIS, SBS.

4. Adaptateur selon l'une des revendications précédentes, **caractérisé en ce que** la gomme de couleur (30) est sous forme de couche recouvrant une pluralité de renforts (35).

5. Adaptateur selon l'une des revendications 1 à 3, **caractérisé en ce que** la gomme de couleur (30) est sous forme d'enrobage individuel (32) de chacun des câbles (35) de renforts.

6. Adaptateur selon l'une des revendications 1 ou 2, **caractérisé en ce que** la gomme de couleur (30) comprend une première couleur sous forme de couche (30) recouvrant une pluralité de fils (35) de renfort et au moins une seconde couleur (C3) distincte de la première, sous forme d'enrobage (32) individuel de chacun des fils (35) de renforts.

7. Adaptateur selon l'une quelconque des revendications 1 à 6, **caractérisé en ce que** la gomme de couleur (30, 32) est localisée uniquement sur une portion de l'adaptateur.

8. Adaptateur selon l'une quelconque des revendications 1 à 7, **caractérisé en ce que** la gomme de couleur (30, 32) est placée au moins au niveau du siège (23) de l'adaptateur.

9. Adaptateur selon l'une quelconque des revendications 1 à 8, **caractérisé en ce que** la gomme de couleur (30, 32) est disposée au moins au niveau du contact entre l'adaptateur et le pneu.

10. Ensemble monté **caractérisé en ce qu'**il comprend un adaptateur selon l'une des revendications 1 à 9.

## Patentansprüche

1. Adapter (A) für eine Fahreinheit, wobei die Fahreinheit eine Drehachse aufweist und einen Reifen (P) mit zwei Wülsten (B) und eine Felge (J) mit zwei Felgenhörnern (8) umfasst, wobei der Adapter (A) die Verbindung zwischen einem der Wülste (B) und der Felge (J) sicherstellt, wobei der Adapter (A) umfasst:
- ein axial inneres Ende (10), das dazu bestimmt ist, auf einem Felgenhorn (8) angebracht zu werden, und ein inneres Verstärkungselement (16) und eine im Wesentlichen radiale axial äußere Fläche (22) umfasst;
- ein axial äußeres Ende (9), das dazu bestimmt ist, mit einem Wulst (B) in Kontakt zu kommen, und ein äußeres Verstärkungselement (15) und eine im Wesentlichen radiale axial innere Fläche oder Anlagefläche (21) umfasst;
- einen im Wesentlichen axialen Körper (11), der das axial äußere Ende (9) mit dem axial inneren Ende (10) verbindet, so dass ein einheitliches Teil gebildet wird;
- wobei der Körper (11) einen Adaptersitz (23) umfasst, der dazu bestimmt ist, den Wulst (B) aufzunehmen, und sich in der Nähe des axial äußeren Endes (9) befindet;
- wobei der Körper (11) wenigstens eine Hauptverstärkungsbewehrung (17) umfasst, welche die Verbindung zwischen dem äußeren Verstärkungselement (15) und dem inneren Verstärkungselement (16) sicherstellt, wobei die Hauptverstärkungsbewehrung (17) wenigstens eine erste (18) und eine zweite (19) Verstärkungslage umfasst, die relativ zueinander radial angeordnet sind, wobei die Verstärkungslagen (18, 19) jeweils Festigkeitsträger (35) umfassen, die zueinander parallel sind und von einer Elastomerzusammensetzung, Kalandriergummi (31) genannt, umhüllt sind,
- **dadurch gekennzeichnet, dass** eine Schicht (30) einer Elastomerzusammensetzung von einer von Schwarz verschiedenen Farbe, auch Farbgummi genannt, wahlweise angeordnet ist:
- anstelle des Kalandriergummis (31), der die Festigkeitsträger (35) jeder Lage umhüllt, oder
- anstelle des Kalandriergummis (31), der die Festigkeitsträger (35) umhüllt und ausschließlich auf dem Außenumfang der Verstärkungslagen angeordnet ist, oder
- außerhalb des Kalandriergummis (31).

2. Adapter nach Anspruch 1, **dadurch gekennzeichnet, dass** der Farbgummi (30) Titanoxid, Kaolin, Kreide oder eine Mischung davon umfasst.

3. Adapter nach einem der vorhergehenden Ansprüche, **dadurch gekennzeichnet, dass** der Farbgummi (30) TPE umfasst, wie etwa SIS, SBS.

4. Adapter nach einem der vorhergehenden Ansprüche, **dadurch gekennzeichnet, dass** der Farbgummi (30) die Form einer Schicht hat, die mehrere Festigkeitsträger (35) bedeckt.

5. Adapter nach einem der Ansprüche 1 bis 3, **dadurch gekennzeichnet, dass** der Farbgummi (30) die Form einer separaten Umhüllung (32) jedes der Verstärkungskorde (35) hat.

6. Adapter nach einem der Ansprüche 1 oder 2, **dadurch gekennzeichnet, dass** der Farbgummi (30) eine erste Farbe in Form einer Schicht (30), die mehrere Verstärkungsfäden (35) bedeckt, und wenigstens eine von der ersten verschiedene zweite Farbe (C3) in Form einer separaten Umhüllung (32) jedes der Verstärkungsfäden (35) umfasst.

7. Adapter nach einem der Ansprüche 1 bis 6, **dadurch gekennzeichnet, dass** sich der Farbgummi (30, 32) nur auf einem Abschnitt des Adapters befindet.

8. Adapter nach einem der Ansprüche 1 bis 7, **dadurch gekennzeichnet, dass** der Farbgummi (30, 32) wenigstens am Sitz (23) des Adapters angebracht ist.

9. Adapter nach einem der Ansprüche 1 bis 8, **dadurch gekennzeichnet, dass** der Farbgummi (30, 32) wenigstens am Kontakt zwischen dem Adapter und dem Reifen angeordnet ist.

10. Montierte Einheit, **dadurch gekennzeichnet, dass** sie einen Adapter nach einem der Ansprüche 1 bis 9 umfasst.

## Claims

1. Adapter (A) for a rolling assembly, the said rolling assembly having an axis of rotation and comprising a tyre (P) having two beads (B), a rim (J) having two rim bead seats (8), the said adapter (A) providing the connection between one of the beads (B) and the rim (J), the said adapter (A) comprising:
- an axially inner end (10) intended to be mounted on a rim bead seat (8) and comprising an inner reinforcing element (16) and a substantially radial axially outer face (22);
- an axially outer end (9) intended to come into contact with a bead (B) and comprising an outer reinforcing element (15) and a substantially radial axially inner face or bearing face (21);
- a substantially axial body (11) connecting the said axially outer end (9) to the said axially inner end (10) so as to form a single piece;
- the said body (11) comprising an adapter seat (23) intended to receive the bead (B) and situated near the axially outer end (9);
- the said body (11) comprising at least one main reinforcement (17) providing the connection between the outer reinforcing element (15) and the inner reinforcing element (16), the main reinforcement (17) comprising at least one first (18) and one second (19) reinforcing ply which are placed radially relative to one another, the said reinforcing plies (18, 19) each comprising mutually parallel reinforcers (35) coated in elastomer composition referred to as skim rubber (31);
- **characterized in that** a layer (30) of elastomer composition in a colour other than black, also referred to as coloured rubber, is positioned, as desired:
- in place of the skim rubber (31) with which the reinforcers (35) of each ply are coated, or
- in place of the skim rubber (31) with which the reinforcers (35) are coated and placed only on the exterior periphery of the reinforcing plies, or
- on the outside of the skim rubber (31).

2. Adapter according to Claim 1, **characterized in that** the coloured rubber (30) contains titanium oxide, kaolin, chalk or a mixture thereof.

3. Adapter according to one of the preceding claims, **characterized in that** the coloured rubber (30) contains TPE, such as SIS, SBS.

4. Adapter according to one of the preceding claims, **characterized in that** the coloured rubber (30) is in the form of a layer covering a plurality of reinforcers (35).

5. Adapter according to one of Claims 1 to 3, **characterized in that** the coloured rubber (30) is in the form of an individual coating (32) of each of the reinforcing cords (35).

6. Adapter according to either of Claims 1 or 2, **characterized in that** the coloured rubber (30) comprises a first colour in the form of a layer (30) covering a plurality of reinforcing threads (35), and at least a second colour (C3), distinct from the first, in the form of an individual coating (32) of each of the reinforcing threads (35).

7. Adapter according to any one of Claims 1 to 6, **characterized in that** the coloured rubber (30, 32) is located on just a portion of the adapter.

8. Adapter according to any one of Claims 1 to 7, **characterized in that** the coloured rubber (30, 32) is positioned at least in the region of the adapter seat (23).

9. Adapter according to any one of Claims 1 to 8, **characterized in that** the coloured rubber (30, 32) is positioned at least in the region of contact between the adapter and the tyre.

10. Mounted assembly, **characterized in that** it comprises an adapter according to one of Claims 1 to 9.
